# EUROPEAN PATENT SPECIFICATION

(11) **EP 2 838 350 B1**
(45) Date of publication and mention of the grant of the patent: **25.05.2016**
(21) Application number: 13713557.0
(22) Date of filing: 14.03.2013
(51) Int. Cl.: A01K 5/00, B01F 7/24, B01F 7/00, B01F 7/16, B01F 13/00, B01F 15/00

(54) **APPARATUS FOR MIXING AND CUTTING ANIMAL FEED AND METHOD OF OPERATING SUCH AN APPARATUS**
VORRICHTUNG ZUM MISCHEN UND SCHNEIDEN VON TIERFUTTER UND VERFAHREN ZUM BETRIEB EINER SOLCHEN VORRICHTUNG
APPAREIL DE MÉLANGE ET DE DÉCOUPE DE NOURRITURE POUR ANIMAUX ET MÉTHODE D'UTILISATION D'UN TEL APPAREIL

(30) Priority: 20.04.2012 NL 2008669
(43) Date of publication of application: 25.02.2015
(73) Proprietor: Lely Patent N.V., 3147 PB Maassluis (NL)
(72) Inventor: HUYZER, Arie, NL-3147 PA Maassluis (NL); SIE, Howard, NL-3147 PA Maassluis (NL); VAN KUILENBURG, Jan Martinus, NL-3147 PA Maassluis (NL); PASTOOR, Jan Lambertus, NL-3147 PA Maassluis (NL)
(74) Representative: Octrooibureau Van der Lely N.V.
(86) International application number: PCT/NL2013/050177
(87) International publication number: WO 2013/157930

(56) References cited:
- EP-A2- 0 704 154
- US-B2- 7 118 268

## Description

### TECHNICAL FIELD

The invention relates to an apparatus for mixing and cutting animal feed comprising a container with a side wall, a rotary mixing and cutting device positioned inside the container and at least one counter element provided at the sidewall, wherein the apparatus further comprises at least one positioning device for moving the at least one counter element between a retracted position and an inserted position, the container comprising a control unit to control the positioning device of the at least one counter element. The invention further relates to a method of operating such an apparatus.

### PRIOR ART

Containers for mixing and cutting animal feed are known in the prior art.

EP0704154A2 describes a truck for shredding and mixing products for zootechnical use, comprising, on a self-propelled or towed wheeled chassis, a frustumshaped container that tapers downwardly, is open at the top, and contains a scroll that rotates with a vertical axis and has an external profile that lies on a substantially conical ideal surface, shredding cutters being fitted at the profile. Countercutters, shaped substantially like a circular sector, are pivoted in a vertical arrangement, by means of their respective vertices, to the wall of the container in substantially radial positions and can be inserted and extracted through specifically provided slots. The truck furthermore comprises an automatic actuation and control device for the positioning of the countercutters according to work variables. The actuation and control device is constituted by an electronic control unit that controls means for the movement of the countercutters. This document addresses the problem that agricultural workers do not always dedicate particular attention to the countercutters and often it happens that the worker forgets the cutters in inserted position when they must not be inserted or vice versa. By way of solution, the electronic control unit is connected to load cells for weighing the product. The control unit moves the countercutters according to a program and on the basis of the load detected by the load cells.

US7,118,268B2 describes a fodder mixing wagon including a fodder mixing container equipped with at least one vertical auger and including an undercarriage having a chassis and ground wheels, which is provided with an active adjusting system for adjusting the fodder distribution within the mixing container. The adjusting system is equipped with at least one sensor arrangement for detecting either the actual fodder weight distribution within and/or the inclination of the mixing container. The adjusting system of the fodder mixing wagon allows to adjust the bottom region of the mixing container relatively precisely horizontally and/or to individually actuate the counter knives depending on the actual inclination of the mixing container or the actual weight distribution, even in the case of an ascending or descending and/or sidewardly sloping ground, in order to achieve an optimum fodder distribution within the mixing container during the mixing process and to prevent that the fodder locally is split outwardly.

### BRIEF DESCRIPTION

It is an object to provide an improved container for mixing and cutting animal feed.

According to an aspect there is provided an apparatus for mixing and cutting animal feed comprising a container with a side wall, a rotary mixing and cutting device positioned inside the container and at least one counter element provided at the sidewall, wherein the apparatus further comprises at least one positioning device for moving the at least one counter element between a retracted position and an inserted position, the apparatus comprising a control unit to control the positioning device of the at least one counter element, characterized in that the control unit is arranged to control at least one positioning device for bringing at least one counter element in a pulsating modus, wherein the at least one counter element moves between the retracted and inserted position and wherein the control unit is arranged to have the at least one counter element move repeatedly between the retracted and inserted position during the pulsating modus.

A counter element is an element that can be inserted into the container, preferably a plate with a vertical orientation. The counter element may be a counter cutter, comprising a cutting edge, but may also mainly be a mixing element without a cutting edge. The counter element may be provided in, on or through the side wall. The side wall may comprise slots through which the counter element can move. Alternatively or additionally, the counter element may be provided on the side wall and swivelable or tiltable with respect thereto.

In the inserted position the at least one counter element is positioned closer to the rotary mixing and cutting device than in the retracted position.

Operating at least one counter element in a pulsating modus is an advantageous way to improve the performance of the apparatus. The pulsating modus may comprise a single back and forth movement, for instance during loading of the container, or a plurality of back and forth movements, for instance during an after-loading phase in which the animal feed is further mixed and cut. The pulsating modus may be initiated to find an optimal balance between guiding the animal feed towards the mixing and cutting device while at the same time piling up of the animal feed is prevented or pile-up of animal feed that already occurred can be freed.

One or more counter cutters may be provided, of which a sub-set may be controlled in the pulsating modus, the sub-set may also comprising all the counter cutters. The counter cutters may be controlled independently from each other, i.e. some counter cutters may be in the pulsating modus, while other counter cutters are not in the pulsating modus.

By repeatedly positioning the counter element in the inserted and retracted position, the animal feed can be pushed towards the mixing and cutting device without the need to continuously position the counter element in the inserted position, which would increase the resistance of the mixing and cutting device and introduces the risk of animal feed piling up against the counter element. The repeated movements may be performed at predetermined constant time intervals.

According to an embodiment the control unit is arranged to have the at least one counter element move between the retracted and inserted position at predetermined time intervals during the pulsating modus.

By applying predetermined time intervals, no measurements are needed during the pulsating modus. The at least one counter element can be moved back and forth according to a predetermined time scheme.

The predetermined time intervals may be settings which can be set and changed by a user. The time intervals may be constant or may vary during the pulsating modus as the mixing and cutting progresses. The time intervals may be chosen such that the at least one counter element is in the retracted position during a first amount of time (for instance 5 or 10 s) and in the inserted position during a second amount of time (for instance 30 or 60s), wherein the first and second amount of time may be different or the same.

According to an example the first amount of time may be much shorter, for instance at least 5 times shorter, than the second amount of time. This is advantageous in case the container is relatively full. In such a case the counter element will often not be positioned in the inserted position constantly although this may be required to guide the animal feed towards the mixing and cutting device to ensure efficient mixing and cutting and to prevent formation of a "doughnut" along the side wall, as in the inserted position piling up of animal feed may occur. According to the example provided the counter element may be in the pulsating modus in which the counter element is in the inserted position during most of the time, but piling up is prevented by positioning the counter element in the retracted position during relatively short periods of time.

In case the pulsating modus comprises a single back and forth movement, the time interval between the back and forth movement can be a setting which can be set and changed by a user or may depend on a working parameter of the apparatus, examples of which will be provided below.

Alternatively, the time intervals may also be automatically adjusted by the control unit based on a determined operational parameter. Examples of operational parameters will be provided below.

The apparatus can be operated in a more energy-efficient way, while optimal mixing and cutting is ensured. The pulsating modus may continue a predetermined amount of time, or may end when the container is empty or manual input is received to end the pulsating modus. Importantly, it is remarked that when the pulsating modus with repeated back and forth movement starts, it is already pre-programmed that the counter element can and, provided the circumstances do not change, will move back and forth repeatedly. In other words, when the circumstances do not change, no new command to insert and retract need be given by some master control or user. A clock or timer suffices. This is different from a back and forth movement which completely depends on operational parameters. In the latter case, with unchanged circumstances, each and every back and every forth movement is only carried out after a new command by some master control, as the result of a new decision, in other words "with these measured circumstances, a new movement is now required".

According to an embodiment the control unit is arranged to determine an operational parameter of the apparatus and the control unit is arranged to control, in particular initiate or stop, the pulsating modus based on the determined operational parameter.

Determining the operational parameter may comprise measuring a relevant parameter and possibly comparing it to a predetermined or preset criterion or threshold.

Controlling the pulsating modus may comprise controlling the start and/or end of the pulsating modus, controlling the time intervals between the back and forth movements between the retracted and inserted position, and so on.

The control unit may use suitable sensors to determine the operational parameter.

This provides the advantage that the apparatus can function autonomously, i.e. no direct user interaction is required to control the pulsating modus. By determining an operational parameter an indication of the operation of the apparatus is obtained, based on which the control unit may decide to start and/or end the pulsating modus.

Different examples of such operational parameters will be provided. The control unit may be arranged to compare the measured operational parameter to at least one predefined criterion or threshold value and control the position of the at least one counter element based on the outcome of the comparison, for instance start the pulsating modus based on the outcome of the comparison.

The criterion or threshold value may be adjustable by a user, for instance via an input device (e.g. a keyboard) coupled to the control unit. The control unit may also be arranged to adjust the threshold value based on other input, such as input about the type of animal feed loaded into the container.

The operational parameter may be a parameter which provides information about the functioning of the container and may for instance relate to the amount of animal feed present in the container, the amount of power needed to perform the mixing and the cutting, the stability of the container.

Such an apparatus has the advantage that the cutting and mixing is controlled in an automatic and reliable way, which no longer requires the constant attention of personnel to watch if the container is functioning in an efficient way and if no animal feed is clustered against side walls of the container out of reach of the rotary mixing and cutting device.

According to an embodiment the operational parameter comprises an indication of the amount of animal feed present in the container, in particular an indication of the volume and/or weight of animal feed present in the container. This is advantageous, as the functioning of the apparatus varies with the amount of animal feed and thus the control of the counter element may depend on the amount of animal feed. The pulsating modus may be initiated by the control unit when more than a predetermined amount of animal feed is present inside the container. If there is less animal feed present inside the container, the counter element may be in the inserted position. When there is more animal feed present than the predetermined amount, the counter element may be operated in the pulsating modus. The pulsating modus may continue a predetermined amount of time, or may end when the container is empty or manual input is received to end the pulsating modus.

The indication of the amount of animal feed present in the container may be determined by the apparatus during operation by using appropriate sensors.

The control unit may also determine that the predetermined amount of animal feed has been reached based on a signal received from a loading device operated to load animal feed into the container. The loading device may send a signal to the control unit comprising information about the amount of animal feed that has been loaded into the container. The loading device may also send a signal to the control unit indicating that a predetermined amount has been reached. The loading device may also send a signal to the control unit indicating that the loading is completed, implying that the predetermined amount has been reached. It will be understood that the apparatus and the loading device may be operated by different control units or by one and the same control unit.

The predetermined time intervals may be adjusted by the control unit based on the determined amount of animal feed, for instance, during the pulsating modus, the counter element may be positioned more and more in the retracted position as the amount of animal feed in the container increases. So, with increasing amount, the first amount of time (retracted position) may increase, while the second amount of time (inserted position) may decrease.

According to an embodiment the apparatus comprises a sensor for measuring a value of the operational parameter, the sensor in particular comprising a weight sensor for measuring a weight of the animal feed in the container and/or a feed height sensor for determining the volume of animal feed present in the container, more in particular an optical camera, yet more in particular a 3D-camera.

The control unit may start the pulsating modus once a predetermined amount of animal feed is present in the container. As long as the predetermined amount of animal feed has not been reached, the counter element may be in the inserted position.

As explained above, information about the amount of animal feed present in the container may be determined by using appropriate sensors, such as a weight sensor or a feed height sensor, but may also be received from a loading device arranged to load animal feed into the container. In particular a 3D-sensor may be advantageously used, as this enables to obtain information about the volume of feed in the container, and the operational value being a feed level in the container. In other words, if during loading, a certain feed level is reached, control of the counter elements, in particular the insertion or the pulsating modus, may be initiated. As fed density may vary, such level control may prove advantageous over feed weight.

The predetermined time intervals may be adjusted by the control unit based on the determined amount of animal feed, for instance, during the pulsating modus, the counter element may be positioned more and more in the retracted position as the amount of feed increases. So, with increasing amount of animal feed, the first amount of time (retracted position) may increase, while the second amount of time (inserted position) may decrease.

The control unit may use a feed height sensor arranged to provide an indication of the volume of the animal feed inside the container. The feed height sensor may be formed by a camera interacting with appropriate image recognition software for computing an indication of the feed height or volume of animal feed in the container. In particular a 3D-sensor may be advantageously used, as this enables to obtain information about the volume of feed in the container, and the operational value being a feed level in the container. In other words, if during loading, a certain feed level is reached, control of the counter elements, in particular the insertion or the pulsating modus, may be initiated. As fed density may vary, such level control may prove advantageous over feed weight.

The control unit may use a weight sensor to provide an indication of the weight. A weight sensor is an advantageous sensor for determining an indication of the amount of animal feed present inside the container. The weight sensor may comprise a number of weighing points or load cells positioned under the container.

According to an embodiment the rotary mixing and cutting device is arranged to be driven by driving means, the driving means being arranged to drive the rotary mixing and cutting device, and the operational parameter comprises an indication of a working parameter of the driving means, in particular an indication of the amount of power consumed by the driving means.

The driving means may be comprised by the apparatus or may be external, the apparatus being arranged to be coupled to the external driving means. The apparatus may further comprise energy supply means, such as energy storage means, for providing energy to the driving means. The energy supply means may be comprised by the apparatus or may be external energy supply means or a combination of both. The cutting may be performed when the apparatus is coupled to the external energy supply means, such as when being coupled to the mains.

The apparatus may comprise a number of wheels. The apparatus may be arranged to move in an autonomous way. Therefore, the control unit may be arranged to determine navigation instructions and move the apparatus in accordance with the navigation instructions. The motor for driving the rotary mixing and cutting device may also be used to drive the wheels. In such as case, the motor is part of the apparatus. A sensor may be provided on the apparatus to determine the indication of a working parameter.

According to an alternative, the apparatus may comprise a coupling member for connecting the apparatus to a towing vehicle or prime mover, wherein the motor is part of the towing vehicle and the coupling may comprise means for transferring energy from the motor to the rotary mixing and cutting device. The means for transferring may be an electrical connection or may be a driving shaft. According to this alternative, a sensor may be provided on the towing vehicle or on the apparatus to determine the indication of a working parameter.

The amount of power consumed by the motor may be determined by measuring an amount of current, torque, revolutions per unit time, noise etc.. The working parameter of the motor may be determined by the control unit.

By determining a working parameter of the motor for driving the rotary mixing and cutting device, such as the amount of power consumed by the motor, an indication is obtained about the efficiency of the mixing and cutting, i.e. whether or not the rotary mixing and cutting device is actually cutting the animal feed (which requires relatively more energy) or is mainly moving the animal feed around in the container (which requires less energy). The power provides a reliable and useful indicator, irrespective of the type of animal food loaded into the container. This may therefore be a good indicator to control and initiate the pulsating modus.

If the amount of power consumed by the motor is above a predefined threshold value, cutting and mixing is relatively efficiently being performed by the rotary mixing and cutting device and the control unit can thus be arranged to initiate the pulsating modus, as there is no need to position the counter element in the inserted position constantly.

During the pulsating modus, the predetermined time intervals may be adjusted by the control unit based on the working parameter of the motor. For instance, the first amount of time (retracted position) may increase with increasing consumed power, while the second amount of time (inserted position) may decrease.

According to an embodiment the operational parameter comprises an indication relating to the weight distribution of animal feed inside the container, in particular indicating an uneven weight distribution.

The apparatus may for instance comprise weight or load sensors position under the container to detect the weight distribution. In case an uneven weight distribution is detected caused by animal feed piling up in front of the counter element, the pulsating modus may be initiated to remove the pile up and prevent further piling up.

The control unit may use a plurality of weighing points distributed under the container to determine such an indication of weight distribution. The control unit may be arranged to initiate the pulsating modus when it is determined that the weight distribution is uneven. This may for instance occur when the counter element is in the inserted position and animal feed piles up in front of the counter element.

Such a pulsating modus may for instance comprise a single pulse, wherein the counter element is moved from the inserted to the retracted position and is moved back from the retracted to the inserted position after a predetermined time interval. Advantageously, the pulsating modus consists of a series of consecutive back and forth movements, that is e.g. advantageous for distributing the total desired mixing and cutting time in a number of pulses, which provide a lower (average) load on the motor and the apparatus as a whole and/or results in a more time-efficient mixing and cutting.

According to an embodiment the operational parameter comprises an indication of the type or types of animal feed loaded in the container, wherein the control unit is arranged to control the at least one counter element in the pulsating modus based on the indication of the type or types of animal feed.

The control unit may receive such an indication from a remote control unit which controls the loading of the container by a loading device. Of course, these two control units may be integrated into a single control unit.

As different types of animal feed, such as fodder, straw, potatoes, have different characteristics regarding mixing and cutting, the control unit may control the pulsating modus differently depending on the type(s) of animal feed present in the container. It will be understood that the animal feed present in the container may be of a single type or may be a mixture of different types of animal feed.

According to an embodiment the control unit is arranged to control the at least one positioning device during a loading phase, in which animal feed is being loaded into the container, and during an after-loading phase, wherein the control unit is arranged to initiate the pulsating modus during the after-loading phase.

During the after-loading phase, no animal feed is loaded into the container, but the rotary mixing and cutting device is still operated to further mix and cut the animal feed. During this phase, the container is usually filled to its maximum level and piling up of animal feed against the counter element is likely to occur and may even result in animal feed being pushed out of the container. In order to prevent this but at the same time make sure that mixing and cutting is performed in an efficient way, the counter element may be operated in the pulsating modus.

During the loading phase the at least one counter element may be positioned in the inserted position.

In embodiments, the apparatus comprises a frame with drive means, such as wheels, the container being provided on the frame, there further being provided driving means fir driving the drive means (wheels) and the rotary mixing and cutting device, as well as an energy supply for providing energy to the driving means and the at least one positioning device. In particular, the apparatus is an autonomous apparatus. For these embodiments, it is particularly advantageous to have the counter elements according to the present invention, as the most efficient use of energy is very desirable in autonomous apparatus with an on-board energy supply.

According to an embodiment, the apparatus is an autonomous apparatus comprising driving means and energy supply means for the driving means.

In embodiments, the apparatus comprises a frame with drive means, such as wheels, the container being provided on the frame, there further being provided driving means, such as a motor, for driving the drive means, the positioning device and the rotary mixing and cutting device, as well as energy supply means for providing energy to the at least one driving means and the at least one positioning device. In particular, the apparatus is an autonomous apparatus. For these embodiments, it is particularly advantageous to have the counter elements according to the present invention, as the most efficient use of energy is very desirable in autonomous apparatus with an on-board energy supply. The control unit may be arranged to determine navigation instructions and move the apparatus in accordance with the navigation instructions.

The driving means may be an electromotor, the energy supply means may be formed by a battery or the like.

The apparatus may further comprise an connection member arranged to be coupled to an external corresponding connection member for recharging the energy supply means. the connection members may be electrical connection members. The control unit may be arranged to perform cutting only or mainly when being connected to the external connection member. The coupling member may be arranged to be coupled to the power take-off of a towing vehicle.

According to a further aspect there is provided an assembly of an apparatus for mixing and cutting animal feed as described above and a towing vehicle or prime mover.

The towing vehicle and the apparatus may be coupled using appropriate coupling members, for instance comprising the power take-off of the towing vehicle. The coupling may comprise means for transferring energy from a motor provided on the towing vehicle for driving the towing vehicle to energize the rotary mixing and coupling device. The means for transferring energy from the motor to the rotary mixing and cutting device may be electrical means or mechanical means, such as a driving shaft.

According to a further aspect there is provided a method of operating an apparatus for mixing and cutting animal feed, the apparatus comprising a container with a side wall, a rotary mixing and cutting device positioned inside the container and at least one counter element provided at the sidewall, wherein the apparatus further comprises at least one positioning device for moving the at least one counter element between a retracted position and an inserted position, the method comprising
a) loading animal feed into the container,
b) rotating the rotary mixing and cutting device,
c) controlling the position of the at least one counter element to be in the retracted position or in the inserted position,
characterized by the action c) further comprises controlling at least one counter element in a pulsating modus, wherein the at least one counter element moves repeatedly between the retracted and inserted position..

It will be understood that actions a), b) and c) may be performed simultaneously. Actions b) and c) may be continued after action a) is completed.

Rotating the rotary mixing and cutting device may be started before or soon after starting loading animal feed into the container. The loading of animal feed will typically be repeated during operation of the apparatus until the container is sufficiently full. During the loading and rotating, the position of the counter cutter can be controlled. In case more than one counter cutter is provided, the position of at least one counter cutter can be controlled or the position of all the counter cutters can be controlled, possibly independently.

According to an embodiment during the pulsating modus the at least one counter element is controlled to move between the retracted and inserted position at predetermined time intervals.

According to an embodiment the method comprises determining an operational parameter of the apparatus and controlling, in particular initiating or stopping, the pulsating modus based on the determined operational parameter.

According to an embodiment the method comprises determining an indication of the amount of animal feed present in the container, in particular an indication of the volume and/or weight of animal feed present in the container.

According to an embodiment the method comprises determining the operational parameter comprises determining a weight of the animal feed in the container and/or a volume of animal feed present in the container.

According to an embodiment the apparatus comprises a motor arranged to drive the rotary mixing and cutting device, and determining the operational parameter comprises determining an indication of a working parameter of the motor, in particular an indication of the amount of power consumed by the motor.

According to an embodiment determining the operational parameter comprises determining an indication relating to the weight distribution of animal feed inside the container, in particular indicating an uneven weight distribution.

According to an embodiment determining the operational parameter comprises determining an indication of the type or types of animal feed loaded in the container.

According to an embodiment the method comprises operating the apparatus in a loading phase and an after-loading phase, wherein the control unit is arranged to initiate the pulsating modus during the after-loading phase.

### SHORT DESCRIPTION OF THE DRAWINGS

Embodiments will now be described, by way of example only, with reference to the accompanying schematic drawings in which corresponding reference symbols indicate corresponding parts, and in which:
- Fig. 1 schematically depicts a perspective view of an embodiment,
- Fig. 2a-2c schematically depict cross sectional views according to embodiments, and
- Fig. 3 schematically depicts a cross sectional views according to a further embodiment.

### DETAILED DESCRIPTION

Embodiments will be described with reference to the Figures.

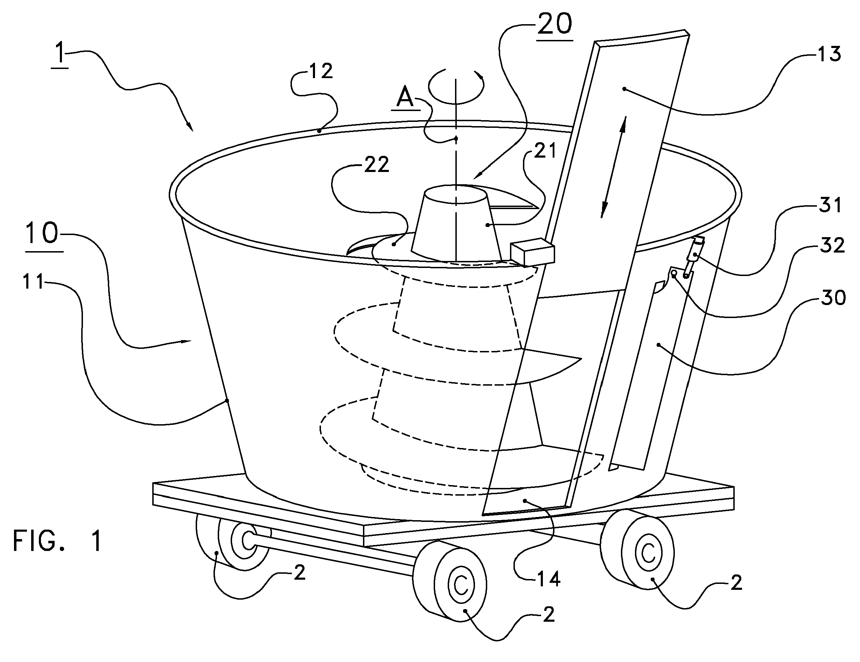

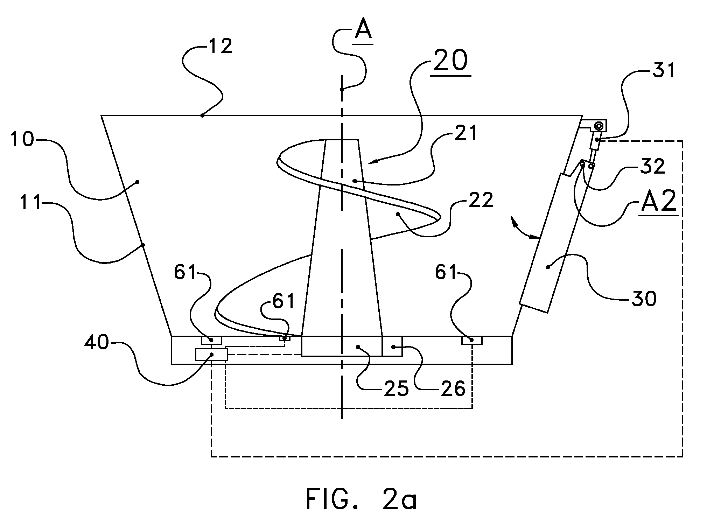

Fig. 1 shows an embodiment of an apparatus 1 for mixing and cutting animal feed comprising a container 10 and a rotary mixing and cutting device 20 positioned inside the container 10 and one counter element 30 provided at a sidewall 11 of the container 10. It will be understood that any number of counter element 30 may be provided. Fig. 2a - c shows a cross sectional view of the apparatus 1. The apparatus 1 further comprises a control unit 40. The control unit 40 may also be positioned at a remote position, but may be functionally part of the apparatus 1.

The apparatus 1 comprises a plurality of wheels 2, one or more of the wheels 2 may be steered and/or wheels may be driven separately. The wheels 2 may be controlled by the control unit 40.

The container 10 has a sidewall 11. The shape of the side wall 11 may be such that mixing, cutting and unloading can be done efficiently. The sidewall 11 may taper in a downward direction. The side wall 11 may have a substantial circular circumference, or preferably an upper edge 12 that deviates from a circle, such as a circle stretched in one direction, having two opposite portions with a smaller radius and two opposite portions with a larger radius.

The side wall 11 further comprises a moveable wall element 13 which can move to create an opening 14 through which the animal feed can be unloaded. The moveable wall element 13 may also be controlled by the control unit 40.

The counter element 30 is preferably positioned at a portion with a smaller radius or at a transition from a smaller radius to a larger radius, taking into account the rotary direction of the rotary mixing and cutting device 20. The counter element 30 is preferably positioned just downstream of the opening 14. The downstream direction is the direction in which the animal feed is rotated by the rotary mixing and cutting device 20.

The rotary mixing and cutting device 20 comprises a central cylindrical shaft 21 with a radial extending member 22, such as a blade, attached to it. The rotary mixing and cutting device 20 is arranged to rotate about a rotary axis A. In the embodiment shown, the rotary mixing and cutting device 20 rotates in a counter clockwise direction when seen from above.

The apparatus further comprises driving means, such as a motor 25 for driving the rotary mixing and cutting device 20. In the embodiments shown in Figures 2a - 2c, the motor 25 is controlled by the control unit 40. The motor 25 may be an electrical motor 25, which is advantageous in case the apparatus is an autonomous apparatus 1 which is arranged to navigate and move autonomously. The apparatus 1 may further comprise energy supply means 26, such as a battery or the like. Alternatively or in addition, the apparatus may comprise a coupling member for coupling to external energy supply means such as the mains to recharge the energy supply means 26 or to power the rotary mixing and cutting device 20 directly.

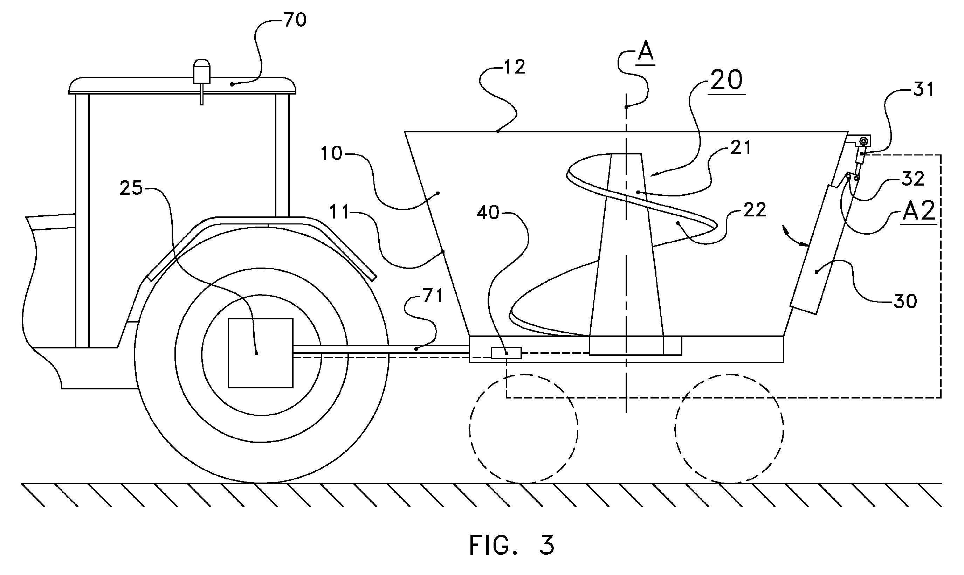

Alternatively, the apparatus comprises a coupling for coupling the apparatus to driving means, such as a motor. The apparatus 1 may for instance be arranged to be coupled to a towing vehicle 70 (see Fig. 3), where the rotary mixing and cutting device can be driven via the coupling, for instance by a driving shaft or the power take-off of the towing vehicle 70.

The blade 22 may be a helical blade surrounding the central cylindrical shaft 21, forming an Archimedes screw. The radial dimension of the helical blade 22 may decrease in upward direction. The central cylindrical shaft 21 may be tapered in the upward direction.

The mixing and cutting device 20, in particular an auger or Archimedes screw, is arranged to transport the animal feed in the upward direction, where the animal feed at some point drops down from the blade 22. This up and down movement of the feed mixes the feed.

The edge of the blade 22 may be arranged to cut the animal feed. Additional cutting members may be provided to cut the animal feed more effectively.

It will be understood that more than one rotary mixing and cutting device 20 may be provided inside the container 10. Also, the rotary mixing and cutting device may have a different orientation, for instance the rotary axis may be at an angle of 0° - 45° with respect to the vertical.

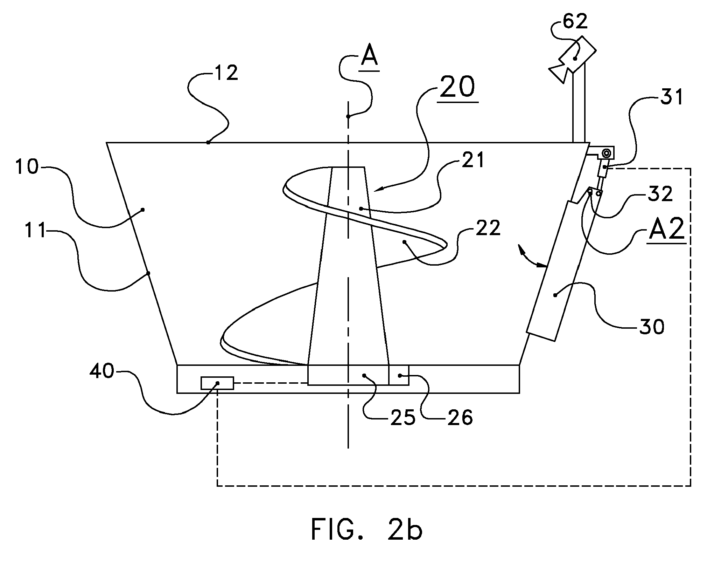

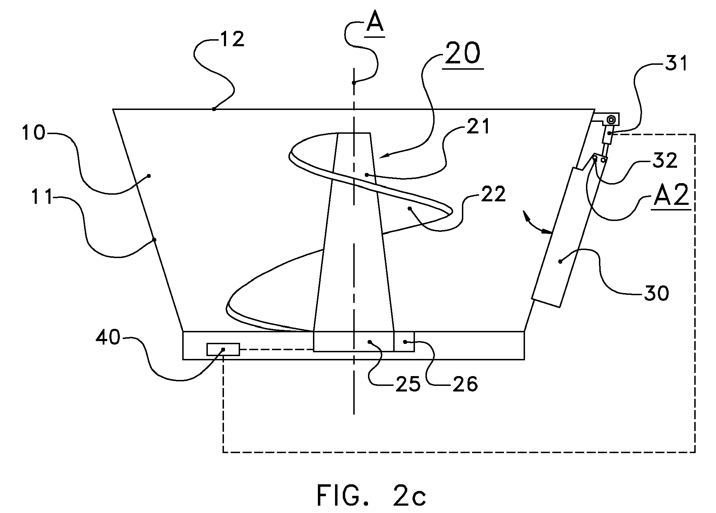

The counter element 30 is moveable between a retracted position and an inserted position, controlled by the control unit 40, as indicated by the double arrow in Figures 2 and 3.

The sidewall 11 of the container 10 comprises an opening or slot 12 to allow the counter element 30 to move between the retracted and inserted position. The counter element 30 is mounted by a rotary connection 32 allowing the counter element 30 to rotate about an axis of rotation A2 which is substantially tangential to the side wall 11 and perpendicular to the rotary axis A of the rotary mixing and cutting device 20, thereby allowing the counter element 30 to move in a substantial radial direction with respect to the rotary axis A of the rotary mixing and cutting device 20. It will be understood that the counter element 30 may be positioned in any other suitable direction, for instance pointing in a downstream direction with respect to the rotary direction of the rotary mixing and cutting device 20.

In the inserted position, the counter element 30 is positioned closer to the rotary mixing and cutting device 20 than in the retracted position. In the retracted position, the counter element 30 may be completely outside the container 10.

Alternative embodiments are conceivable, such as an embodiment in which no slots 12 or the like are provided in the side wall 11, but wherein the counter element 30 is positioned parallel to the side wall 11 in the retracted position and is connected to the side wall 11 via a rotary connection allowing to rotate the counter element 30 to an inserted position in which the counter element 30 is rotated towards the rotary mixing and cutting device 20.

A positioning device 31 may be provided to move the counter element 30 between the inserted and retracted position, the positioning device 31 being controlled by the control unit 40. The positioning device 31 may be an actuator, such as an hydraulic actuator. The control unit 40 is arranged to control the positioning device 31 for bringing the counter element in a pulsating modus, wherein the counter element 30 performs a back and forth movement between the retracted and inserted position. The back and forth movements are performed at predetermined time intervals. The back and forth movement may be performed once or may be performed repeatedly. The control unit 40 comprises or has access to a clock or timer for timing the back and forth movements at the predetermined time intervals.

The control unit 40 may comprise a processor and a memory, wherein the memory comprises programming lines which are readable and executable by the processor to provide the control unit 40 with the functionality in accordance with the embodiments. The control unit 40 may comprise an input/output unit allowing the control unit to send instructions and receive information from other hardware parts of the apparatus, such as the wheels 2, sensors, the motor 25, the positioning device 31 etc. The ability to communicate is indicated in the Figures by dotted lines. This communication may be wired or wireless communication.

The control unit 40 may also comprise user interface means, such as a keyboard and a display, allowing a user to define settings, such as the predetermined time intervals. The user interface means may also be formed by a remote computer, arranged to communicate with the control unit 40.

The apparatus 1 may be arranged to determine an operational parameter of the apparatus 1, which can be used by the control unit 40 to control the positioning device 31 to be positioned in the inserted position, the retracted position or to be in the pulsating modus. The operational parameter may in particular be used to initiate or stop the pulsating modus and/or to determine the characteristics of the pulsating modus, such as the time intervals between the back and forth movements.

The apparatus 1 may comprise one or more sensors to determine an operations parameter of the apparatus 1.

The sensor may be formed a weight sensor for measuring a weight of the animal feed in the container, for instance formed by one or more load cells 61 provided under the container 10 as shown in Fig. 2a to provide an indication of the weight of the animal feed in the container 10.

The operational parameter may also comprises an indication relating to the weight distribution of animal feed inside the container 10, in particular indicating an uneven weight distribution. The load cells 61 as shown in Fig. 2a may be suitable for this, as the different readings by different load cells 61 indicate an uneven weight distribution.

Alternatively, the apparatus 1 may comprise a feed height sensor for determining the volume of animal feed present in the container 10, more in particular an optical camera, yet more in particular a 3D-camera, as schematically shown in Fig. 2b.

Fig. 2c depicts an advantageous embodiment in which the operational parameter comprises an indication of a working parameter of the motor 25, in particular an indication of the amount of power consumed by the motor 25.

As shown in Fig. 2c, the motor 25 may be part of the apparatus 1.

Fig. 3 shows an alternative embodiment, showing an assembly of an apparatus 1 and a towing vehicle 70. According to this embodiment, the apparatus 1 comprises a coupling member 71 for connecting the apparatus 1 to a towing vehicle 70 or prime mover, wherein the motor 25 is part of the towing vehicle 70 and the coupling member 71 may comprise means for transferring energy from the motor 25 to the rotary mixing and cutting device 20. The means for transferring may be an electrical connection or may be a driving shaft.

In both embodiments (Fig. 2c and 3), the control unit may be arranged to determined an indication of a working parameter of the motor, in particular an indication of the amount of power consumed by the motor 25.

The apparatus may be an autonomous apparatus 1, which can navigate and move autonomously. In that case, the apparatus 1 can be provided with an electrical motor 25. The amount of power consumed by the motor may be determined by measuring electrical characteristics of the motor, such as measuring electrical current and or voltage consumed by the motor.

The control unit 40 may also be arranged to receive an indication of the type or types of animal feed loaded in the container 10, wherein the control unit 40 is arranged to control the at least one counter element 30 in the pulsating modus based on the indication of the type or types of animal feed. For instance, the decision to initiate and/or stop the pulsating modus may be based on the type or types of animal feed inside the container. Also, the predetermined time intervals may depend on the type or types of animal feed.

The functioning of the apparatus will now be described in more detail.

First, animal feed is loaded into the container 10. This may be done by an employee or in an automated way. This is referred to as action a).

During loading (action a), the rotary mixing and cutting device 20 can be rotated, although this may also be started after loading is completed or halfway during loading. Rotating the rotary mixing and cutting device is referred to as action b). Next, the position of the at least one counter element 30 is controlled to be in the retracted position or in the inserted position in action c). This may be done during action b) or only during part of action b). The phase during which action a) is performed is referred to as the loading phase. The phase after action a) is completed is referred to as the after-loading phase. During the after-loading phase, rotating the rotary mixing and cutting device 20 may continue, the apparatus may move to a different location and unloading of the apparatus 1 via opening 14 may take place. Rotating, moving and unloading may be performed simultaneously.

During action c) the counter element 30 can be brought in a pulsating modus, wherein the at least one counter element 30 moves between the retracted and inserted position, in particular repeatedly. Back and forth movements between the retracted and inserted position are done at predetermined time intervals, for instance every 30 seconds.

The time intervals may be chosen such that the counter element is in the inserted position for most of the time and is in the retracted position for a relatively small amount of the time, to allow piled up animal feed to be released.

According to an embodiment, the control unit 40 determines an operational parameter and control the pulsating modus based on the determined operational parameter.

The control unit 40 may for instance determine an indication of the amount of animal feed present in the container 10 and decide to position the counter element 30 in the inserted position when the amount of animal feed is below a predetermined amount and initiate the pulsating modus once the amount of animal feed is above a predetermined amount. The amount of animal feed may be expressed as a weight (e.g. kg's) or in volume (e.g. m³), using a weight sensor as described with reference to Fig. 2a or a feed height sensor as described with reference to Fig. 2b.

The information received by the control unit 40 from the load cells 61 may also be used to determined a weight distribution. Once an uneven weight distribution is noticed by the control unit 40, and the counter element 30 is in the inserted position, the pulsating modus may be initiated to control the counter element to perform one pulse, i.e. one back and forth movement to allow piled up animal feed to be released.

The control unit 40 may also determine an indication of a working parameter of the motor 25, in particular an indication of the amount of power consumed by the motor 25 during action c) and control the pulsating modus based on that. For instance, the counter element 30 may be controlled to be in the inserted position when the power is below a predetermined threshold value and may be brought in the pulsating modus when the power is above a predetermined threshold value.

The predetermined time intervals and threshold values may be pre-programmed and may be adjustable by a user via a suitable user interface. Also, the time intervals and threshold may depend on the type or types of animal feed loaded in the container 10.

According to an example, the apparatus 1 will first be loaded during a loading phase. During the loading phase (action a)), the rotary mixing and cutting device 20 may already be rotating (action b)). Once the loading is completed, i.e. during an after-loading phase, the rotary mixing and cutting device 20 may continue to be rotated (action b)) and the control unit 40 is brought into the pulsating modus.

According to a further embodiment, the method further comprises action d) unloading the container 10. Unloading may be done by moving the moveable wall element 13 creating an opening 14.

The method may further comprise computing navigation instructions and moving the apparatus in accordance with the navigation instructions to position the apparatus at a loading position during action a) and moving the apparatus to an unloading position or along an unloading path during action d). Actions b) and c) may be performed during actions a) and d) and during movement of the apparatus, in particular from the loading position to the unloading position or unloading path.

Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. Apparatus (1) for mixing and cutting animal feed comprising a container (10) with a side wall (11), a rotary mixing and cutting device (20) positioned inside the container (10) and at least one counter element (30) provided at the sidewall (11), wherein the apparatus further comprises at least one positioning device (31) for moving the at least one counter element between a retracted position and an inserted position, the apparatus (1) comprising a control unit (40) to control the positioning device (31) of the at least one counter element (30), **characterized in that** the control unit (40) is arranged to control at least one positioning device (31) for bringing at least one counter element (30) in a pulsating modus, wherein the at least one counter element (30) moves between the retracted and inserted position and wherein the control unit is arranged to have the at least one counter element (30) move repeatedly between the retracted and inserted position during the pulsating modus.

2. Apparatus according to claim 1, wherein the control unit is arranged to have the at least one counter element (30) move between the retracted and inserted position at predetermined time intervals during the pulsating modus.

3. Apparatus (1) according to any one of the preceding claims, wherein the control unit (40) is arranged to determine an operational parameter of the apparatus (1) and the control unit (40) is arranged to control, in particular initiate or stop, the pulsating modus based on the determined operational parameter.

4. Apparatus (1) according to claim 3, wherein the operational parameter comprises an indication of the amount of animal feed present in the container (10), in particular an indication of the volume and/or weight of animal feed present in the container (10).

5. Apparatus according to claim 4, comprising a sensor for measuring a value of the operational parameter, the sensor in particular comprising a weight sensor for measuring a weight of the animal feed in the container (10) and/or a feed height sensor for determining the volume of animal feed present in the container (10), more in particular an optical camera, yet more in particular a 3D-camera.

6. Apparatus (1) according to claim 3 or 4, wherein the rotary mixing and cutting device (20) is arranged to be driven by driving means (25), the driving means (25) being arranged to drive the rotary mixing and cutting device (20), and the operational parameter comprises an indication of a working parameter of the driving means (25), in particular an indication of the amount of power consumed by the driving means (25).

7. Apparatus (1) according to any one of the claims 3 - 6, wherein the operational parameter comprises an indication relating to the weight distribution of animal feed inside the container (10), in particular indicating an uneven weight distribution.

8. Apparatus (1) according to any one of the claims 3 - 7, wherein the operational parameter comprises an indication of the type or types of animal feed loaded in the container (10), wherein the control unit (40) is arranged to control the at least one counter element (30) in the pulsating modus based on the indication of the type or types of animal feed.

9. Apparatus (1) according to any one of the preceding claims, wherein the control unit (40) is arranged to control the at least one positioning device (31) during a loading phase, in which animal feed is being loaded into the container (10), and during an after-loading phase, wherein the control unit (40) is arranged to initiate the pulsating modus during the after-loading phase.

10. Apparatus according to any one of the preceding claims, the apparatus (1) being an autonomous apparatus (1) comprising driving means (25) and energy supply means (26) for the driving means (25).

11. Assembly of an apparatus (1) according to any one of the claims 1 - 9 and a towing vehicle (70) or prime mover.

12. Method of operating an apparatus (1) for mixing and cutting animal feed, the apparatus comprising a container (10) with a side wall (11), a rotary mixing and cutting device (20) positioned inside the container (10) and at least one counter element (30) provided at the sidewall (11), wherein the apparatus further comprises at least one positioning device (31) for moving the at least one counter element between a retracted position and an inserted position, the method comprising
a) loading animal feed into the container (10),
b) rotating the rotary mixing and cutting device (20),
c) controlling the position of the at least one counter element (30) to be in the retracted position or in the inserted position,
**characterized by** the action c) further comprises controlling at least one counter element (30) in a pulsating modus, wherein the at least one counter element (30) moves repeatedly between the retracted and inserted position

13. Method according to claim 12, wherein during the pulsating modus the at least one counter element (30) is controlled to move between the retracted and inserted position at predetermined time intervals.

14. Method according to any one of the claims 12 - 13, wherein the method comprises determining an operational parameter of the apparatus (1) and controlling, in particular initiating or stopping, the pulsating modus based on the determined operational parameter.

15. Method according to claim 14, wherein the method comprises determining an indication of the amount of animal feed present in the container (10), in particular an indication of the volume and/or weight of animal feed present in the container (10).

16. Method according to claim 15, wherein determining the operational parameter comprises determining a weight of the animal feed in the container (10) and/or a volume of animal feed present in the container (10).

17. Method according to any one of the claims 14 - 16, wherein the apparatus (1) comprises a motor (25) arranged to drive the rotary mixing and cutting device (20), and determining the operational parameter comprises determining an indication of a working parameter of the motor, in particular an indication of the amount of power consumed by the motor (25).

18. Method according to any one of the claims 14-17, wherein determining the operational parameter comprises determining an indication relating to the weight distribution of animal feed inside the container (10), in particular indicating an uneven weight distribution.

19. Method according to any one of the claims 14 - 18, wherein determining the operational parameter comprises determining an indication of the type or types of animal feed loaded in the container (10).

20. Method according to any one of the claims 12-19, wherein method comprises operating the apparatus in a loading phase and an after-loading phase, wherein the control unit (40) is arranged to initiate the pulsating modus during the after-loading phase.

## Patentansprüche

1. Vorrichtung (1) zum Mischen und Schneiden von Tierfutter, aufweisend einen Behälter (10) mit einer Seitenwand (11), ein drehendes Misch- und Schneidgerät (20), das innerhalb des Behälters (10) angeordnet ist, und mindestens ein Gegenelement (30), das an der Seitenwand (11) vorgesehen ist, wobei die Vorrichtung ferner mindestens ein Positionierungsgerät (31) zum Bewegen des mindestens einen Gegenelements zwischen einer eingezogenen Position und einer eingeführten Position aufweist, wobei die Vorrichtung (1) eine Steuereinheit (40) zum Steuern des Positionierungsgeräts (31) des mindestens einen Gegenelements (30) aufweist, **dadurch gekennzeichnet, dass** die Steuereinheit (40) zum Steuern von mindestens einem Positionierungsgerät (31) zum Verbringen von mindestens einem Gegenelement (30) in einen pulsierenden Modus angeordnet ist, wobei sich das mindestens eine Gegenelement (30) zwischen der eingezogenen und eingeführten Position bewegt, und wobei die Steuereinheit zum Veranlassen angeordnet ist, dass sich das mindestens eine Gegenelement (30) während des pulsierenden Modus wiederholt zwischen der eingezogenen und eingeführten Position bewegt.

2. Vorrichtung nach Anspruch 1, wobei die Steuereinheit zum Veranlassen angeordnet ist, dass sich das mindestens eine Gegenelement (30) während des pulsierenden Modus in vorgegebenen Zeiträumen zwischen der eingezogenen und eingeführten Position bewegt.

3. Vorrichtung (1) nach einem der vorhergehenden Ansprüche, wobei die Steuereinheit (40) zum Bestimmen eines Betriebsparameters der Vorrichtung (1) angeordnet ist und die Steuereinheit (40) zum Steuern, insbesondere zum Einleiten und Anhalten, des pulsierenden Modus auf Grundlage des bestimmten Betriebsparameters angeordnet ist.

4. Vorrichtung (1) nach Anspruch 3, wobei der Betriebsparameter eine Angabe der Menge von Tierfutter, das im Behälter (10) vorhanden ist, insbesondere eine Angabe des Volumens und/oder Gewichts von Tierfutter, das im Behälter (10) vorhanden ist, aufweist.

5. Vorrichtung nach Anspruch 4, aufweisend einen Sensor zum Messen eines Werts des Betriebsparameters, wobei der Sensor insbesondere einen Gewichtssensor zum Messen eines Gewichts des Tierfutters im Behälter (10) und/oder einen Futterhöhensensor zum Bestimmen des Volumens von Tierfutter, das im Behälter (10) vorhanden ist, dabei insbesondere eine Kamera, des Weiteren insbesondere eine 3D-Kamera aufweist.

6. Vorrichtung (1) nach einem der Ansprüche 3 oder 4, wobei das drehende Misch- und Schneidgerät (20) dazu angeordnet ist, durch Antriebsmittel (25) angetrieben zu werden, wobei das Antriebsmittel (25) zum Antreiben des drehenden Misch- und Schneidgeräts (20) angeordnet ist, und wobei der Betriebsparameter eine Angabe eines Arbeitsparameters des Antriebsmittels (25), insbesondere eine Angabe der Menge an Leistung, die durch das Antriebsmittel (25) verbraucht wird, aufweist.

7. Vorrichtung (1) nach einem der Ansprüche 3 bis 6, wobei der Betriebsparameter eine Angabe bezüglich der Gewichtsverteilung von Tierfutter innerhalb des Behälters (10) aufweist, die insbesondere eine ungleichmäßige Gewichtsverteilung anzeigt.

8. Vorrichtung (1) nach einem der Ansprüche 3 bis 7, wobei der Betriebsparameter eine Angabe der Art oder Arten von Tierfutter, das in den Behälter (10) geladen ist, aufweist, wobei die Steuereinheit (40) zum Steuern des mindestens einen Gegenelements (30) im pulsierenden Modus auf Grundlage der Angabe der Art oder Arten von Tierfutter angeordnet ist.

9. Vorrichtung (1) nach einem der vorhergehenden Ansprüche, wobei die Steuereinheit (40) zum Steuern des mindestens einen Positionierungsgeräts (31) während einer Ladephase, in der Tierfutter in den Behälter (10) geladen wird, und einer Phase nach dem Laden angeordnet ist, wobei die Steuereinheit (40) zum Einleiten des pulsierenden Modus während der Phase nach dem Laden angeordnet ist.

10. Vorrichtung nach einem der vorhergehenden Ansprüche, wobei die Vorrichtung (1) eine autonome Vorrichtung (1) ist, die Antriebsmittel (25) und Energiezufuhrmittel (26) zum Versorgen des Antriebsmittels (25) aufweist.

11. Baugruppe aus einer Vorrichtung (1) nach einem der Ansprüche 1 bis 9 und einem Schleppfahrzeug (70) oder einer Zugmaschine.

12. Verfahren zum Betrieb einer Vorrichtung (1) zum Mischen und Schneiden von Tierfutter, wobei die Vorrichtung einen Behälter (10) mit einer Seitenwand (11), ein drehendes Misch- und Schneidgerät (20), das innerhalb des Behälters (10) angeordnet ist, und mindestens ein Gegenelement (30), das an der Seitenwand (11) vorgesehen ist, aufweist, wobei die Vorrichtung ferner mindestens ein Positionierungsgerät (31) zum Bewegen des mindestens einen Gegenelements zwischen einer eingezogenen Position und einer eingeführten Position aufweist, das Verfahren aufweisend:
a) Laden von Tierfutter in den Behälter (10),
b) Drehen des drehenden Misch- und Schneidgeräts (20),
c) Steuern der Position des mindestens einen Gegenelements (30), sodass es sich in der eingezogenen Position oder in der eingeführten Position befindet,
**dadurch gekennzeichnet, dass** der Vorgang c) ferner das Steuern von mindestens einem Gegenelement (30) in einem pulsierenden Modus aufweist, wobei sich das mindestens eine Gegenelement (30) wiederholt zwischen der eingezogenen und eingeführten Position bewegt.

13. Verfahren nach Anspruch 12, wobei das mindestens eine Gegenelement (30) während des pulsierenden Modus zum Bewegen zwischen der eingezogenen und eingeführten Position in vorgegebenen Zeiträumen gesteuert wird.

14. Verfahren nach einem der Ansprüche 12 bis 13, wobei das Verfahren das Bestimmen eines Betriebsparameters der Vorrichtung (1) und das Steuern, insbesondere Einleiten und Anhalten, des pulsierenden Modus auf Grundlage des bestimmten Betriebsparameters aufweist.

15. Verfahren nach Anspruch 14, wobei das Verfahren das Bestimmen einer Angabe der Menge von Tierfutter, das im Behälter (10) vorhanden ist, insbesondere einer Angabe des Volumens und/oder Gewichts von Tierfutter, das im Behälter (10) vorhanden ist, aufweist.

16. Verfahren nach Anspruch 15, wobei das Bestimmen des Betriebsparameters das Bestimmen eines Gewichts des Tierfutters im Behälter (10) und/oder eines Volumens von Tierfutter, das im Behälter (10) vorhanden ist, aufweist.

17. Verfahren nach einem der Ansprüche 14 bis 16, wobei die Vorrichtung (1) einen Motor (25) aufweist, der zum Antreiben des drehenden Misch- und Schneidgeräts (20) angeordnet ist, und wobei das Bestimmen des Betriebsparameters das Bestimmen einer Angabe eines Arbeitsparameters des Motors, insbesondere einer Angabe der Menge an Leistung, die durch den Motor (25) verbraucht wird, aufweist.

18. Verfahren nach einem der Ansprüche 14 bis 17, wobei das Bestimmen des Betriebsparameters das Bestimmen einer Angabe bezüglich der Gewichtsverteilung von Tierfutter innerhalb des Behälters (10) aufweist, die insbesondere eine ungleichmäßige Gewichtsverteilung anzeigt.

19. Verfahren nach einem der Ansprüche 14 bis 18, wobei das Bestimmen des Betriebsparameters das Bestimmen einer Angabe der Art oder Arten von Tierfutter, das in den Behälter (10) geladen ist, aufweist.

20. Verfahren nach einem der Ansprüche 12 bis 19, wobei das Verfahren das Betreiben der Vorrichtung in einer Ladephase und einer Phase nach dem Laden aufweist, wobei die Steuereinheit (40) zum Einleiten des pulsierenden Modus während der Phase nach dem Laden angeordnet ist.

## Revendications

1. Appareil (1) servant à mélanger et découper des aliments pour animaux comprenant un récipient (10) avec une paroi latérale (11), un dispositif de mélange et découpe rotatif (20) positionné à l'intérieur du récipient (10) et au moins un contre-élément (30) disposé au niveau de la paroi latérale (11), l'appareil comprenant en outre au moins un dispositif de positionnement (31) pour déplacer l'au moins un contre-élément entre une position rétractée et une position insérée, l'appareil (1) comprenant une unité de commande (40) pour contrôler le dispositif de positionnement (31) de l'au moins un contre-élément (30), **caractérisé en ce que** l'unité de commande (40) est configurée pour contrôler au moins un dispositif de positionnement (31) afin de placer au moins un contre-élément (30) dans un mode pulsatoire, l'au moins un contre-élément (30) se déplaçant entre la position rétractée et insérée et l'unité de commande étant configurée pour faire en sorte que l'au moins un contre-élément (30) se déplace de façon répétée entre la position rétractée et insérée dans le mode pulsatoire.

2. Appareil selon la revendication 1, dans lequel l'unité de commande est configurée pour faire en sorte que l'au moins un contre-élément (30) se déplace entre la position rétractée et insérée à des intervalles de temps prédéterminés dans le mode pulsatoire.

3. Appareil (1) selon l'une quelconque des revendications précédentes, dans lequel l'unité de commande (40) est configurée pour déterminer un paramètre opérationnel de l'appareil (1) et l'unité de commande (40) est configurée pour contrôler, en particulier initier ou arrêter, le mode pulsatoire en fonction du paramètre opérationnel déterminé.

4. Appareil (1) selon la revendication 3, dans lequel le paramètre opérationnel comprend une indication de la quantité d'aliments pour animaux présents dans le récipient (10), en particulier une indication du volume et/ou du poids d'aliments pour animaux présents dans le récipient (10).

5. Appareil selon la revendication 4, comprenant un capteur pour mesurer une valeur du paramètre opérationnel, le capteur comprenant en particulier un capteur de poids pour mesurer un poids des aliments pour animaux dans le récipient (10) et/ou un capteur de hauteur d'aliments pour déterminer le volume d'aliments pour animaux présents dans le récipient (10), plus particulièrement une caméra optique, encore plus particulièrement une caméra 3D.

6. Appareil (1) selon la revendication 3 ou 4, dans lequel le dispositif de mélange et découpe rotatif (20) est configuré pour être entraîné par un moyen d'entraînement (25), le moyen d'entraînement (25) étant configuré pour entraîner le dispositif de mélange et découpe rotatif (20), et le paramètre opérationnel comprend une indication d'un paramètre de travail du moyen d'entraînement (25), en particulier une indication de la quantité d'énergie consommée par le moyen d'entraînement (25).

7. Appareil (1) selon l'une quelconque des revendications 3 à 6, dans lequel le paramètre opérationnel comprend une indication relative à la distribution de poids des aliments pour animaux à l'intérieur du récipient (10), en particulier indiquant une distribution de poids inégale.

8. Appareil (1) selon l'une quelconque des revendications 3 à 7, dans lequel le paramètre opérationnel comprend une indication du type ou des types d'aliments pour animaux chargés dans le récipient (10), l'unité de commande (40) étant configurée pour contrôler l'au moins un contre-élément (30) dans le mode pulsatoire en fonction de l'indication du type ou des types d'aliments pour animaux.

9. Appareil selon l'une quelconque des revendications précédentes, dans lequel l'unité de commande (40) est configurée pour contrôler l'au moins un dispositif de positionnement (31) pendant une phase de chargement dans laquelle des aliments pour animaux sont chargés dans le récipient (10), et pendant une phase post-chargement, l'unité de commande (40) étant configurée pour initier le mode pulsatoire pendant la phase post-chargement.

10. Appareil selon l'une quelconque des revendications précédentes, l'appareil (1) étant un appareil autonome (1) comprenant un moyen d'entraînement (25) et un moyen de fourniture d'énergie (26) pour le moyen d'entraînement (25).

11. Ensemble d'un appareil (1) selon l'une quelconque des revendications 1 à 9 et d'un véhicule tracteur (70) ou d'une machine motrice.

12. Procédé de fonctionnement d'un appareil (1) servant à mélanger et découper des aliments pour animaux, l'appareil comprenant un récipient (10) avec une paroi latérale (11), un dispositif de mélange et découpe rotatif (20) positionné à l'intérieur du récipient (10) et au moins un contre-élément (30) disposé au niveau de la paroi latérale (11), l'appareil comprenant en outre au moins un dispositif de positionnement (31) pour déplacer l'au moins un contre-élément entre une position rétractée et une position insérée, le procédé comprenant
a) le chargement d'aliments pour animaux dans le récipient (10),
b) la rotation du dispositif de mélange et découpe rotatif (20),
c) le contrôle de la position de l'au moins un contre-élément (30) pour qu'il soit dans la position rétractée ou dans la position insérée,
**caractérisé en ce que** l'action c) comprend en outre le contrôle d'au moins un contre-élément (30) dans un mode pulsatoire dans lequel l'au moins un contre-élément (30) se déplace de façon répétée entre la position rétractée et la position insérée.

13. Procédé selon la revendication 12, dans lequel dans le mode pulsatoire l'au moins un contre-élément (30) est contrôlé pour se déplacer entre la position rétractée et insérée à des intervalles de temps prédéterminés.

14. Procédé selon l'une quelconque des revendications 12 et 13, le procédé comprenant la détermination d'un paramètre opérationnel de l'appareil (1) et le contrôle, en particulier l'initiation ou l'arrêt du mode pulsatoire en fonction du paramètre opérationnel déterminé.

15. Procédé selon la revendication 14, le procédé comprenant la détermination d'une indication de la quantité d'aliments pour animaux présents dans le récipient (10), en particulier une indication du volume et/ou du poids d'aliments pour animaux présents dans le récipient (10).

16. Procédé selon la revendication 15, dans lequel la détermination du paramètre opérationnel comprend la détermination d'un poids des aliments pour animaux dans le récipient (10) et/ou d'un volume d'aliments pour animaux présents dans le récipient (10).

17. Procédé selon l'une quelconque des revendications 14 à 16, dans lequel l'appareil (1) comprend un moteur (25) configuré pour entraîner le dispositif de mélange et découpe rotatif (20), et la détermination du paramètre opérationnel comprend la détermination d'une indication d'un paramètre de travail du moteur, en particulier une indication de la quantité d'énergie consommée par le moteur (25).

18. Procédé selon l'une quelconque des revendications 14 à 17, dans lequel la détermination du paramètre opérationnel comprend la détermination d'une indication relative à la distribution de poids des aliments pour animaux à l'intérieur du récipient (10), en particulier indiquant une distribution de poids inégale.

19. Procédé selon l'une quelconque des revendications 14 à 18, dans lequel la détermination du paramètre opérationnel comprend la détermination d'une indication du type ou des types d'aliments pour animaux chargés dans le récipient (10).

20. Procédé selon l'une quelconque des revendications 12 à 19, le procédé comprenant le fonctionnement de l'appareil dans une phase de chargement et une phase post-chargement, l'unité de commande (40) étant configurée pour initier le mode pulsatoire pendant la phase post-chargement.
